(19) Europäisches Patentamt
European Patent Office
Office européen des brevets

(11) Veröffentlichungsnummer: **0 001 768**
**B1**

(12) # EUROPÄISCHE PATENTSCHRIFT

(45) Veröffentlichungstag der Patentschrift: **17.06.81**

(21) Anmeldenummer: **78101126.7**

(22) Anmeldetag: **12.10.78**

(51) Int. Cl.³: **C 08 G 65/40,**
C 08 G 75/23 //C09J3/16,
D01F6/66

(54) **Verfahren zur Herstellung von Polyäthern.**

(30) Priorität: **05.11.77 DE 2749645**

(43) Veröffentlichungstag der Anmeldung:
**16.05.79 Patentblatt 79/10**

(45) Bekanntmachung des Hinweises auf die Patenterteilung:
**17.06.81 Patentblatt 81/24**

(84) Benannte Vertragsstaaten:
**BE DE FR GB NL**

(56) Entgegenhaltungen:
**DE - A - 2 433 400**
**DE - A - 2 803 873**
**US - A - 4 051 109**

(73) Patentinhaber: **BASF Aktiengesellschaft**
**Carl-Bosch-Strasse 38**
**D-6700 Ludwigshafen (DE)**

(72) Erfinder: **Blinne, Gerd, Dr.**
**Im Woogtal 7**
**D-6719 Bobenheim (DE)**
Erfinder: **Cordes, Claus, Dr.**
**Halbergstrasse 13**
**D-6719 Weisenheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 001 768 B1

# Verfahren zur Herstellung von Polyäthern

Die Erfindung betrifft ein Verfahren zur Herstellung von Polyäthern, insbesondere sulfongruppenhaltige Polyäthern, in Abwesenheit von Lösungsmitteln.

Polymere mit Sulfon- und Äthergruppen sind bereits bekannt. Nach Angaben der DT—AS 15 45 106 werden lineare Polyarylenpolyäther durch Umsetzung von Alkalimetalldoppelsalzen von zweiwertigen mono- oder dinuklearen Phenolen mit einer äquimolaren Menge einer einkernigen Benzolverbindung mit zwei Halogenatomen und mindestens einer Elektronen anziehenden Gruppe in o- oder p-Stellung unter wasserfreien Bedingungen und in flüssiger Phase in Gegenwart von Sulfoxiden oder Sulfonen als Lösungsmittel hergestellt.

Polysulfonäther aus Phenolaten und aromatischen Dihalogenverbindungen werden gemäß DT—OS 19 57 091 und CA—PS 847 963 in Gegenwart von polaren hochsiedenden Lösungsmitteln und wasserfreiem Alkalicarbonat, besonders Kaliumcarbonat hergestellt. Bei den genannten Verfahren muß das erhaltene Polykondensat zur Weiterverarbeitung meist vom Lösungsmittel abgetrennt und getrocknet werden, wodurch die Verfahren erheblich verteuert werden.

Polyäthersulfone werden gemäß DT—AS 1 795 725 durch Kondensation eines Alkalimetallsalzes von 4-(4-Halogenphenylsulfonyl)-phenyl bei einer Temperatur oberhalb 150° in Abwesenheit eines unter den Reaktionsbedingungen reaktionsfähigen Verdünnungs- oder Lösungsmittels erhalten. Nachteilig an diesem Verfahren ist, daß die 4-(4-Halogenphenylsulfonyl)-phenolate nur in Lösung hergestellt werden können und das Verfahren durch eine aufwendige Isolierung und Trocknung der Ausgangskomponenten verteuert wird.

In der DE—A—2 433 400 ist ein Verfahren zur Herstellung eines aromatischen Polymeren durch Umsetzung eines Dialkalimetallsalzes eines Bisphenols mit einer Dihalogenbenzolverbindung bei 200 bis 400°C in Abwesenheit eines Lösungsmittels beschreiben. Die Diphenolverbindung wird vorzugsweise durch Auflösen des Bisphenols in einer wäßrigen Alkalimetallhydroxidlösung und Eindampfen der wäßrigen Lösung zur Trockene hergestellt. Hierbei müssen exakt stöchiometrische Mengen eingehalten werden, da ein Uberschuß an Alkalihydroxid zu Hydrolyse bei der Polyätherbildung unter Verlust von Halogen und damit zur Bildung eines Produkts mit unerwünscht niedrigem Molekulargewicht führt. Das Molekulargewicht des Polyäthers wird auch durch freies Phenol als Folge der Verwendung einer zu geringen Alkalimenge bei der Phenolsalzherstellung und durch die Anwesenheit von Wasser, das bei der Phenolsalzherstellung gebildet wird und dessen Entfernung eine azeotrope Destillation erfordert, erniedrigt. Außerdem bilden sich aufgrund des anwesenden Wassers häufig große Phenolatagglomerate, die zu erheblichen Störungen bei der Polykondensation führen können.

Es war nun nicht ohne weiteres naheliegend, die Diphenolatverbindung statt in wäßriger Lösung in der Schmelze herzustellen und ohne Isolierung gleich mit der Dihalogenbenzolverbindung zu polykondensieren. Da die Diphenylatverbindungen nichtschmelszbare Substanzen sind, die sich oberhalb von 350—400°C zersetzen, mußte man beim Arbeiten in Extrudern oder Knetern mit Klumpenbildung und Verstopfungen rechnen. Es war jedenfalls nicht vorhersehbar, daß eine Polykondensation ohne Isolierung des Zwischenproduktes störungsfrei durchführbar ist.

Aufgabe der vorliegenden Erfindung war es, ein störungsfrei durchführbares Verfahren zur Herstellung von Polyäthern auf Basis von Bisphenolen und Dihalogenbenzolverbindungen zum einen oder Halogenphenolen zum anderen zu entwickeln, mit dem es möglich ist, in Abwesenheit von Lösungs- oder Verdünnungsmitteln ohne Isolierung von Zwischenprodukten hochmolekulare Polyäther herzustellen.

Gegenstand der Erfindung ist ein Verfahren zur Herstellung von Polyäthern durch Polykondensation von

A. bestimmten Bisphenolen mit bestimmten Dihalogenverbindungen in Gegenwart von wasserfreiem Kaliumcarbonat, wobei das Bisphenol zunächst mit dem Kaliumcarbonat umgesetzt und ohne Isolierung des Zwischenproduktes anschließend mit der Dihalogenverbindung polykondensiert wird, oder von

B. bestimmten Halogenphenolen in Gegenwart von wasserfreien Polycarbonat.

Dieses Verfahren ist erfindungsgemäß dadurch gekennzeichnet, daß man in Abwesenheit von Lösungs- oder Verdünnungsmitteln arbeitet.

Das erfindungsgemäße Verfahren weist den Vorteil auf, daß die kostspielige Isolierung von Zwischenprodukten sowie die Abtrennung und Regenerierung von Lösungs- und Verdünnungsmitteln entfällt.

Zur Herstellung der hochmolekularen Polyäther eignen sich Bisphenole, die sich von der Formel

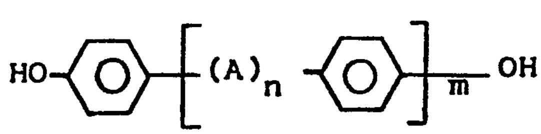

ableiten lassen, in der A einen zweiwertigen Rest aus der Gruppe —$C(CH_3)_2$—, —CO— und vorzugsweise —$SO_2$— und n und m 0 oder 1 bedeuten.

Derartige Bisphenole sind beispielsweise Hydrochinon, Resorcin, 4,4'-Bisphenol, 2,2-Bis-(4-oxyphenol-)propan, Bis-(4-oxyphenyl)-keton und vorzugsweise Bis-(4-oxyphenyl-)sulfon.

Die genannten Bisphenole können einzeln oder in Form von Mischungen zur Anwendung kommen.

Als Dihalogenverbindungen eignen sich Verbindungen der Formeln

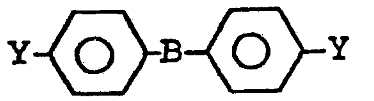 ,

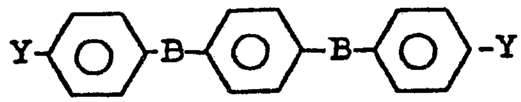

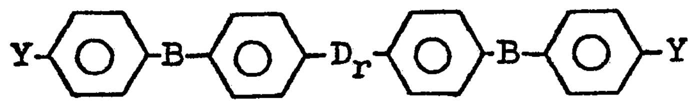

in denen Y den Rest —F oder vorzugsweise —Cl, B den Rest —CO— oder —$SO_2$— bedeuten, D für —O— oder —S— steht und r 0 oder 1 ist.

Als derartige Dihalogenbenzolverbindungen seien beispielsweise genannt: Bis-(4-chlorphenyl-)-sulfon, Bis-(4-fluorphenyl-)sulfon, Bis-(4-chlorphenyl-)keton, 1,4-Bis-(4-chlorbenzoyl-)benzol, 1,4-Bis-(4-chlorbenzolsulfonyl-)benzol, 4,4'-Bis-(4-chlorbenzoyl-)diphenyläther, 4,4'-Bis-(4-chlorbenzoyl-)diphenylsulfid, 4,4'-Bis-(4-chlorbenzoyl-)diphenyl, 4,4'-Bis-(4-chlorbenzolsulfonyl-)diphenyläther, 4,4'-Bis-(4-chlorbenzolsulfonyl-)diphenylsulfid oder 4,4'-Bis-(4-chlorbenzolsulfonyl-)diphenyl. Die Dihalogenbenzolverbindungen können ebenfalls einzeln oder als Gemische verwendet werden. Vorzugsweise verwendet werden Bis-(4-chlorphenyl-)sulfon und 4,4'-Bis-(4-chlorbenzoyl-)diphenyläther oder deren Gemische.

Als Halogenphenole gelangen Verbindungen der Formel

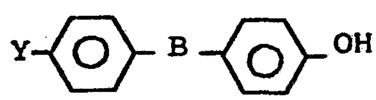

zur Anwendung, in der
Y den Rest —F oder vorzugsweise Cl und
B den Rest —CO— oder vorzugsweise $SO_2$— bedeuten.

Beispiele derartiger Halogenphenole sind 4-(4-Chlorphenylsulfonyl)-phenol, 4-(4-Fluorphenylsulfonyl)-phenol, 4-(4-Chlorbenzoyl)-phenol, 4-(4-Fluorbenzoyl)-phenol. Vorzugsweise kommt zur Anwendung 4-(4-Chlorphenylsulfonyl)-phenol.

Zur Durchführung des erfindungsgemäßen Verfahrens wird vorzugsweise

A) 1 Mol Bisphenol mit 0,9 bis 1,1 Molen, vorzugsweise 1,0 bis 1,05 Mol Dihalogenbenzolverbindung und 1,0 bis 2,2 Molen, vorzugsweise 1,1 bis 2,0 Molen wasserfreiem Kaliumcarbonat oder

B) 1 Mol Halogenphenol mit 0,5 bis 1,1 Molen, vorzugsweise 0,55 bis 1,0 Molen wasserfreiem Kaliumcarbonat

in Abwesenheit von Lösungsmitteln, vorzugsweise in der Schmelze, bei Temperaturen von 200°C bis 400°C, vorzugsweise von 250°C bis 350°C zu Polyäthern umgesetzt. Bei Verwendung temperaturempfindlicher Monomerer ist die obere Grenze der Reaktionstemperatur durch die beginnende Zersetzung der Komponenten gegeben.

Besonders bewährt und daher vorzugsweise zur Herstellung der hochmolerkularen Polyäther angewandt wird die Verfahrensvariante A) auf Basis von Bisphenol und Dihalogenbenzolverbindung, insbesondere auf Basis von Bisphenolen und Sulfongruppen haltigen Dihalogenbenzolverbindungen. Im Falle der Kondensation von Bisphenolen mit Dihalogenbenzolverbindungen wird zweckmäßigerweise das Bisphenol mit dem Alkalicarbonat in einer ersten Stufe bis zur vollständigen Entfernung des Kohlendioxids und Wassers bei den angegebenen Temperaturen umgesetzt und anschließend daran in einer zweiten Reaktionstufe mit der Dihalogenbenzolverbindung bis zur gewünschten Viskosität polykondensiert. Dabei kann das Reaktionswasser gegebenenfalls unter vermindertem Druck abgetrennt werden.

Es kann jedoch auch vorteilhaft sein, das Bisphenol, die Dihalogenbenzolverbindung und das Alkalicarbonat zu Beginn der Polykondensation zu mischen und in einer ersten Reaktionsstufe gegebenenfalls unter vermindertem Druck bei den oben genannten Temperaturen das Wasser und Kohlendioxid abzutrennen, um dann in einer zweiten Reaktionsstufe bis zur gewünschten Viskosität

weiter zu kondensieren. Ausgangskomponenten, die sich während der ersten Reaktionsstufe zusammen mit dem Reaktionswasser verflüchtigen, werden zweckmäßigerweise zu Beginn der Kondensation in einem entsprechenden Überschuß eingesetzt oder während der zweiten Reaktionsstufe laufend ersetzt. Gegebenenfalls kann es von Vorteil sein, die Reaktionstemperatur mit fortschreitender Kondensation innerhalb der angegebenen Grenzen zu erhöhen. Zur Durchführung des erfindungsgemäßen Herstellungsverfahrens eignen sich Vorrichtungen aus gegenüber den Reaktanden inerten Materialen, in denen bei den erforderlichen hohen Reaktionstemperaturen ein befreidigender Kontakt der Reaktionspartner gewährleistet wird sowie der Abtrennung flüchtiger Reaktionsprodukte möglich ist.

Geeignet sind beispielsweise die für Polymere üblichen Kneter oder Extruder, die eine Vorrichtung zur Entfernung flüchtiger Bestandteile aufweisen.

Das Reaktionsgemisch wird solange im genannten Temperaturbereich polykondensiert, bis der erforderliche Kondensationsgrad erreicht ist. Die Polykondensationszeit kann je nach Art der Ausgangskomponenten und gewählten Reaktionsbedingungen 0,1 bis 10 Stunden, vorzugsweise 0,2 bis 2 Stunden, betragen. Als Endgruppen für die Polykondensate eignen sich alle chemisch inerten Gruppen. Zum Einbau der Endgruppen wird dem Polykondensationsgemisch zweckmäßigerweise nach Erreichen des gewünschten Polykondensationsgrades eine entsprechende Verbindung in einer geringen Menge einverleibt. Vorzugsweise verwendet werden aliphatische und aromatische Halogenverbindungen, insbesondere Methylchlorid und die oben genannten Dihalogenbenzolverbindungen.

Der anorganische Bestandteil Kaliumchlorid kann vor oder nach Isolierung des Polyäthers durch geeignete Methoden, wie Lösen und Filtrieren, Sieben oder Extrahieren, entfernt werden.

Die mit Hilfe des erfindungsgemäßen Verfahrens hergestellten Polyäther besitzen reduzierte Viskositäten (gemessen bei 23°C in 1%iger Schwefelsäurelösung) von 0,4 bis 1,5, vorzugsweise von 0,45 bis 0,75. Dies entspricht etwa Molekulargewichten von 16 000 bis 120 000, vorzugsweise von 20 000 bis 50 000. Die hergestellten Polyäther sind vorzüglich zur Herstellung von Formkörpern, Fasern, Folien, Kleb- und Beschichtungstoffen geeignet.

Die Erfindung wird durch die nachfolgenden Beispiele und Vergleichsbeispiele näher erläutert. Die genannten Teile sind Gewichtsteile. Die reduzierten Viskositäten ($\eta_{red}$) wurden bei 24°C in 1%iger Schwefelsäurelösung gemessen und entsprechend der Formel

$${}_{red} = \frac{\eta_{spez}}{C}$$

bestimmt.

Die in den Beispielen genannten Teile beziehen sich auf das Gewicht.

Beispiel 1

250,3 Teile Bis-(4-oxyphenyl-)sulfon werden mit 276,4 Teilen wasserfreiem Kaliumcarbonat innig vermischt und unter vermindertem Druck bei 300°C solange behandelt, bis die berechnete Menge Wasser und Kohlendioxid abgetrennt sind (ca. 3 Stunden). Danach werden 287,2 Teile Bis-4(chlorphenyl-)sulfon hinzugefügt und das Polykondensationsgemisch unter ständigem Mischen weitere 30 Minuten bei 300°C behandelt. Nach Erreichen einer reduzierten Viskosität von $\eta_{red} = 0{,}50$ werden nochmals 10 Teile Bis-(4-chlorphenyl-)sulfon hinzugefügt. Nach weiteren 30 Minuten war die Polykondensation beendet. Das erhaltene Polymere wurde zur Abtrennung der organischen Salze mit Wasser extrahiert. Es besaß eine Viskosität von $\eta_{red} = 0{,}54$ und ließ sich zu Formkörpern hoher Temperaturbeständigkeit und guter Eigenfarbe verarbeiten.

Beispiel 2

228,3 Teile 2,2-Bis-(4-oxyphenyl-)propan, 287,2 Teile Bis-(4-chlorphenyl-)sulfon und 165 Teile wasserfreies Kaliumcarbonat werden innig vermischt und unter ständigem Mischen auf 300°C erhitzt. Dabei wird Kohlendioxid und Wasser laufend aus dem Reaktionsgemisch entfernt. Bei einer reduzierten Viskosität von $\eta_{red} = 0{,}55$, die nach etwa 30 Minuten erhalten wird, werden 10 Teile Bis-(4-chlorphenyl-)sulfon zugesetzt und das Polymere nach weiteren 30 Minuten isoliert. Es besaß nach Abtrennung der anorganischen Salze durch Behandlung mit heißem Wasser eine reduzierte Viskosität von $\eta_{red} = 0{,}58$ und ließ sich zu Formkörpern hoher Temperaturbeständigkeit und guter Eigenfarbe verarbeiten.

Beispiel 3

268,7 Teile 4-(4-Chlor-)phenylsulfonyl-phenol werden mit 138,2 Teilen wasserfreiem Kaliumcarbonat innig vermischt und unter ständigem Mischen solange auf 320°C erhitzt, bis unter Entfernen aller flüchtigen Spaltprodukte die reduzierte Viskosität des Polykondensationsgemisches $\eta_{red} = 0{,}62$ beträgt (ca. 25 Minuten). Nach Zugabe von 5 Teilen Bis-(4-chlorphenyl-)sulfon wird weitere 30 Minuten auf 300°C erhitzt. Das Polymere besaß nach Abtrennung der anorganischen Salze durch Behandlung mit heißem Wasser eine reduzierte Viskosität von $\eta_{red} = 0{,}60$ und ließ sich zu Formkörpern hoher Temperaturständigkeit und guter Eigenfarbe verarbeiten.

Beispiele 4 bis 6

Man verfährt analog den Angaben von Beispiel 1, versetzt jedoch das Reaktionsgemisch nach der genannten Reaktionszeit mit 10 Teilen Bis-(4-chlorphenyl-)sulfon und führt die Polykondensation bei der angegebenen Reaktionstemperatur in 30 Minuten zu Ende. Die Viskositätszahlen wurden nach Abtrennung der anorganischen Salze durch Behandeln mit heißem Wasser ermittelt.

Die Polymeren ließen sich in allen Fällen zu Formkörpern mit hoher Temperaturbeständigkeit verarbeiten.

Die verwendeten Ausgangskomponenten und Reaktionsbedingungen sowie die Viskosität und Eigenfarbe der erhaltenen Polyäther sind in der nachfolgenden Tabelle zusammengefaßt.

TABELLE

| Bsp. | Bisphenol | Dihalogenverbindung (Teile) | Alkalicarbonat (Teile) | Reaktionstemperatur (°C) | Reaktionszeit (Min.) | $\eta_{red}$ (dl/g) | Polymerfarbe |
|---|---|---|---|---|---|---|---|
| 4 | Resorcin (110,1) | Bis-(4-chlorphenyl-)sulfon (287,1) | $K_2CO_3$ (276,4) | 320 | 25 | 0,46 | hell |
| 5 | Bis-(4-oxyphenyl-)sulfon (250,3) | 1,4-Bis-(4-chlorbenzoyl)-benzol (355,2) | ,, | 300 | 35 | 0,62 | hell |
| 6 | Bis-(4-oxyphenyl-)sulfon (250,3) | 4,4'-Bis-(4-chlorbenzoyl-)diphenyläther (447,3) | ,, | 320 | 42 | 0,60 | hell |

**Patentansprüche**

1. Verfahren zur Herstellung von Polyäthern durch Polykondensation von im wesentlichen äquivalenten Mengen eines oder mehrerer Bisphenole der Formel

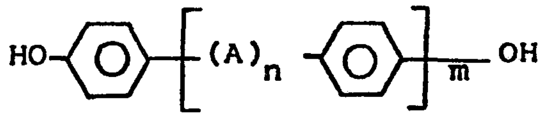

in der A einen zweiwertigen Rest aus der Gruppe —$C(CH_3)_2$—, —$SO_2$—, —CO— und n und m 0 oder 1 bedeuten, mit einer oder mehreren Dihalogenbenzolverbindungen der Formeln

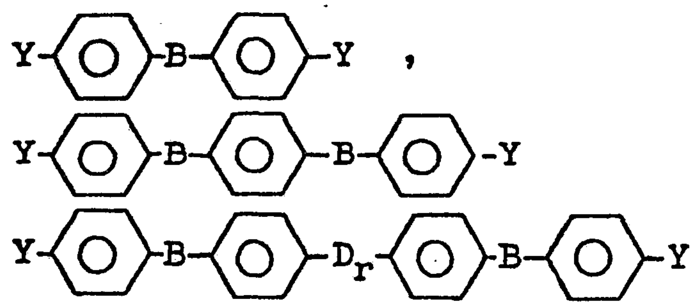

,

oder

in denen Y den Rest —F oder —Cl, B den Rest —CO— oder —$SO_2$— bedeuten, D für —O— oder —S— steht und r 0 oder 1 ist, in Gegenwart von wasserfreiem Kaliumcarbonat, wobei das Bisphenol zunächst mit dem Kaliumcarbonat umgesetzt und ohne Isolierung des Zwischenproduktes anschließend mit der Dihalogenbenzolverbindung polykondensiert wird, dadurch gekennzeichnet, daß man in Abwesenheit von Lösungs- oder Verdünnungsmitteln arbeitet.

2. Verfahren zur Herstellung von Polyäthern durch Polykondensation von einem oder mehreren Halogenphenolen der Formel

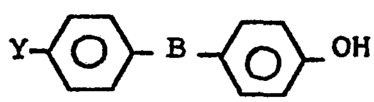

in der Y den Rest —F oder —Cl und B den Rest —CO— oder —$SO_2$— bedeuten, in Gegenwart von wasserfreiem Kaliumcarbonat, dadurch gekennzeichnet, daß man in Abwesenheit von Lösungs- oder Verdünnungsmitteln arbeitet.

3. Verfahren nach Anspruch 1, dadurch gekennzeichnet, daß man 1 Mol Bisphenol mit 0,9 bis 1,1 Molen Dihalogenbenzolverbindung und 1,0 bis 2,2 Molen wasserfreiem Kaliumcarbonat in Abwesenheit von Lösungsmitteln bei Temperaturen von 200°C bis 400°C polykondensiert.

4. Verfahren nach Anspruch 2, dadurch gekennzeichnet, daß man 1 Mol Halogenphenol und 0,5 bis 1,1 Mole wasserfreies Kaliumcarbonat in Abwesenheit von Lösungsmitteln bei Temperaturen von 200°C bis 400°C polykondensiert.

**Claims**

1. A process for the manufacture of a polyether by polycondensing substantially equivalent amounts of one or more bisphenols of the formula

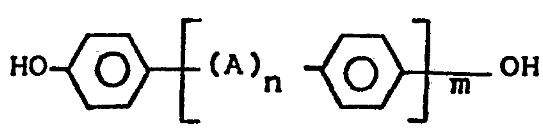

where A is a divalent radical selected from the group comprising —$C(CH_3)_2$—, —$SO_2$— and —CO— and n and m are 0 or 1, with one or more dihalobenzene compounds of the formulae

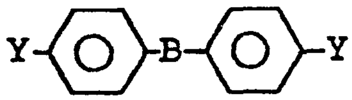 ,

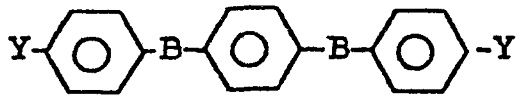

or 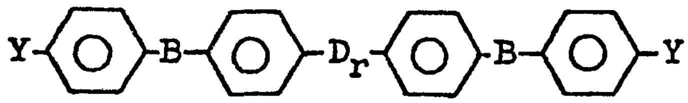

where Y is —F or —Cl, B is —CO— or —$SO_2$—, D is —O— or —S— and r is 0 or 1, in the presence of an anhydrous potassium carbonate, the bisphenol first being reacted with the potassium carbonate and, without the intermediate being isolated, then being polycondensed with the dihalobenzene compound, characterized in that one works in the absence of a solvent or diluent.

2. A process for the manufacture of a polyether by polycondensing one or more halophenols of the formula

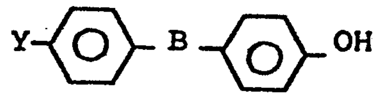

where Y is —F or —Cl and B is —CO— or —$SO_2$—, in the presence of an anhydrous potassium carbonate, characterized in that one works in the absence of a solvent or diluent.

3. A process as claimed in claim 1, characterised in that 1 mole of bisphenol is polycondensed with from 0.9 to 1.1 moles of dihalobenzene compound and from 1.0 to 2.2 moles of anhydrous potassium carbonate in the absence of a solvent, at from 200° to 400°C.

4. A process as claimed in claim 2, characterised in that 1 mole of halophenol and from 0.5 to 1.1 moles of anhydrous potassium carbonate are polycondensed in the absence of a solvent, at from 200° to 400°C.

**Revendications**

1. Procédé de préparation de polyéthers par polycondensation de proportions sensiblement équivalentes d'un ou de plusieurs bis-phénols de la formule

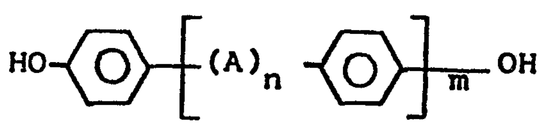

dans laquelle A désigne un reste bivalent choisi parmi les groupes —$C(CH_3)_2$—, —$SO_2$— et —CO— et n et m peuvent valoir 0 ou 1, avec un ou plusieurs dérivés de dihalobenzène des formules

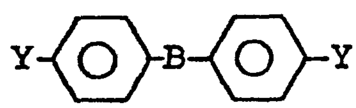 ,

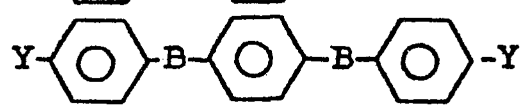

et 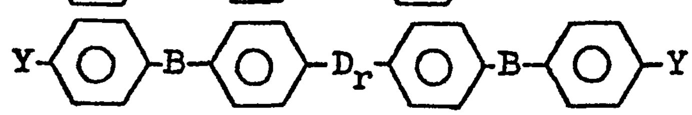

dans lesquelles Y représente un reste —F ou —Cl, B un groupe —CO— ou —$SO_2$—, D = —O— ou —S— et r = 0 ou 1, en présence de carbonate de potassium anhydre, dans lequel on fait réagir d'abord le bis-phénol avec le carbonate de potassium, puis on polycondense le produit réactionnel intermédiaire sans isolement avec le dérivé dihalo-benzénique, caractérise en ce que ces réactions sont réalisées en l'absence d'un solvant ou diluant.

2. Procédé de préparation de polyéthers par polycondensation d'un ou de plusieurs halo-phénols de la formule

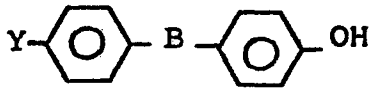

dans laquelle Y représente un reste —F ou —Cl et B un groupe —CO— ou —$SO_2$—, en présence de carbonate de potassium anhydre, caractérise en ce que la réaction est réalisée en l'absence d'un solvant ou diluant.

3. Procédé suivant la revendication 1, caractérisé en ce que l'on polycondense 1 mole de bisphénol avec 0,9 à 1,1 mole de dérivé dihalo-benzénique et 1,0 à 2,2 moles de carbonate de potassium anhydre en l'absence d'un solvant à une température comprise entre 200 et 400°C.

4. Procédé suivant la revendication 2, caractérisé en ce que l'on polycondense 1 mole d'halophénol et 0,5 à 1,1 mole de carbonate de potassium anhydre en l'absence d'un solvant à une température comprise entre 200 et 400°C.